# EUROPEAN PATENT APPLICATION

(11) **EP 3 358 505 A1**
(43) Date of publication of application: **08.08.2018**
(21) Application number: 16849095.1
(22) Date of filing: 09.09.2016
(51) Int. Cl.: G06K 9/62, G06K 9/68, G06F 17/30

(54) **METHOD OF CONTROLLING AN IMAGE PROCESSING DEVICE**

(30) Priority: 24.09.2015 RU 2015140595
(71) Applicant: Averianov, Vitalii Vitalievich, Tula, Tulskaja obl. 300005 (RU)
(72) Inventor: KOMISSAROV, Andrei Valerievich, Tula 301138 (RU)
(74) Representative: Schmidt, Steffen J.
(86) International application number: PCT/RU2016/050031
(87) International publication number: WO 2017/052420

(57) **Abstract**

The present method of controlling an image processing device consists in transmitting data such that it can be reproduced on image processing devices of other users. An image signal is produced using an image generator and an image is displayed using a display, then data about the received image is obtained and additional information is linked to the data about the received image. The transmission of data constitutes the transmission of additional information linked to data about a received image, said information being transmitted to a server via the Internet. The additional information is displayed provided that the data obtained about the received image coincides with the data about the received image on other devices for processing the image with respect to which additional information has been generated, which, in turn, has been linked to the image.

## Description

The invention relates to the field of information technology, computer technology, namely, processing and generating image data, image processing for computer graphics, and can be used to search, retrieve and process and display image data.

A known method for capturing an image comprises the following steps: capturing a digital image; receiving the image capture position information indicating the position in which the digital image is captured; receive direction information of the image grip indicating the direction in which the digital image is captured; receiving direction information of the image grip indicating the direction in which the digital image is captured; receiving a plurality of additional information elements from the additional information storage device that stores a plurality of additional information elements, wherein each element of the plurality of supplementary information elements corresponds to a predetermined object, and each element contains object position information indicating the position of the corresponding object; determining view space by the image pickup position information and the image acquisition direction information divided into subfields and selected for each of the subfields corresponding one or more additional information elements having an amount not exceeding an amount that is set in the corresponding one of the subfields among the plurality of elements up to -additional information containing a plurality of item information items of objects, respectively indicating the positions contained in the subfields; and displaying the corresponding one or more elements from the plurality of supplementary information elements overlaid on the digital image, wherein the corresponding one or more elements from the plurality of supplementary information items are selected in said selection step (see. RU 2463663 C2, cl. G06T19/00, G06T11/60).

The known method can be implemented to visualize and filter additional landmark information superimposed on a terrain image captured by a camera.

The disadvantage of the known method is its limited application only in the mapping of the landmarks of the terrain and that it requires obtaining data on the direction and position of the capture. The known method can not be used to display additional information about movable objects or objects not tied to the terrain. These drawbacks limit the scope of application of the known method.

The closest in technical essence, the prototype, is a method for managing an image processing device capable of communicating with a server that provides a microblogging function for publishing a message registered by a user to another user and including a data storage unit configured to store image data. The method comprises the steps of:
registering with the registration unit the first message on the server, if the image data is stored in the data storage unit;
tracking the second message by the tracking unit, which re-registered with respect to the first message registered at the time of registration;
analyzing the second message by the analysis unit if the second message is detected during the tracking; and
storing the image data in the data storage unit is transmitted by the transmission unit based on the analysis result at the time of analysis (see RU 2013158163 A, cl. G06F13/00).

The known solution allows to provide additional information to the image and provide it to another user.

The disadvantage of the known method is the excessive accumulation of additional information related to the image, regardless of the circumstances of capturing the image, leading to the use of high requirements for capacity and speed of storage of digital information and excluding or making it difficult to apply additional information as required due to the need to select information from a large information volume.

A known solution provides for the exchange of messages regarding an image that is static image or an image obtained in the past. This image can not be an image obtained in real time.

In addition, the essence of the known solution is reduced to the exchange of messages with the user, that is, there is an address communication that requires an addressee, which is not acceptable in the presence of a large number of potential recipients.

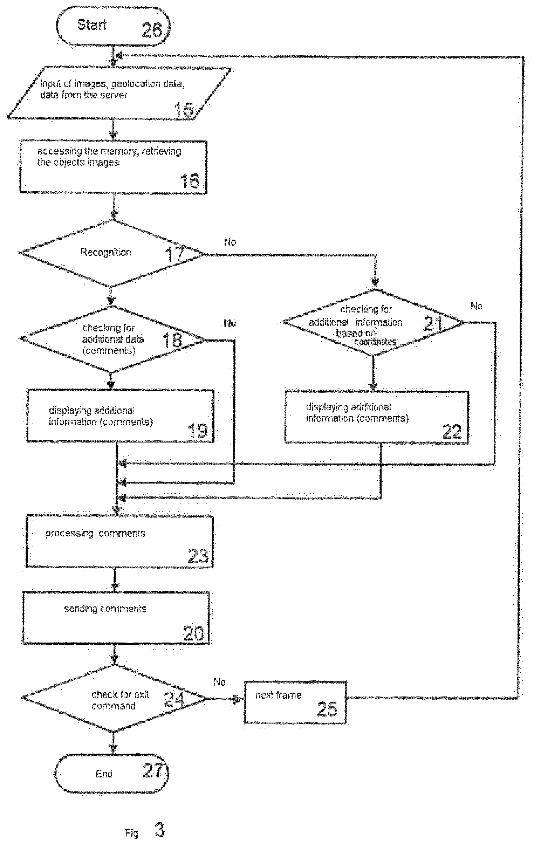

The technical results achieved herein are :
- simplification of the implementation by reducing the requirements for the wireless communication lines employed,
- improvement in ease of use by excluding the possibility of display additional information not related to objects in the image,
- ensuring the possibility of using an image obtained in real time with augmented reality,
- providing the possibility of obtaining additional information for an unlimited number of users.
The invention is further explained and illustrated with the drawings, wherein FIG. 1 is a schematic representation of an implementation of a method for controlling an image processing apparatus; FIG. 2 is a block diagram of an image processing apparatus; FIG. 3 - the algorithm of the computing means of the image processing device.
The following notations are made in the drawings. 1 - image processing device, 2 - image processing device of another registered user, 3 - object detected and recognized on the image, 4 - image of additional information, 5 - architectural object, 6 - Internet, 7 - built-in camera, 8 - 9 - digital storage device of the image processing device, 10 - input means, 11 - display (screen), 12 - module for communication with the server, 13 - geolocation module, 14 - server data processing tools (server), 15 - receiving and entering camera images, receiving and entering geolocation data, obtaining and inputting data from the server, 16 - accessing the memory of the digital storage, retrieving the objects images for recognition, 17 - detecting and recognizing objects in the image, 18 - checking for availability of additional data (comments) in the received data from the server generated by other registered users associated with the detected object in the image, 19 - display comments related to the object generated by other registered users, 20 - sending comments related to the object or geographic coordinates on the server, 21 - checking for additional information of other registered users left in these coordinates, 22 - displaying comments related to the coordinates formed by other registered users, 23 - processing input comments for sending to the server, 24 - checking the presence of an exit command from the calculation program, 25 - transition to analysis of the next frame of the received image, 26, 27 - beginning and end of the calculation program, respectively, 28 - means of recognition, 29 - means comparison of geographic coordinates data, 30 - the means for forming the final image with overlay of additional information.
The method for controlling the image processing apparatus is provided as follows. The description of the method is related to the need to define the following terms. The resulting image - the image signal obtained from the camera output or from the digital drive memory. Additional information - data of text, image, sound or their combinations inputted by the user input means on top of the resulting image and / or sound. Geolocation data - the geographical coordinates of the image processing device, obtained with the help of GPS, GLONASS, GSM base stations or similar. Data regarding the image received - data related to the detected and recognized object on the resulting image, as well as geolocation data of the place where the image processing device received the image and entered additional information. Registered users - members of the Internet resource of social, educational, professional or other orientation registered according to the order established for such a resource and having an ability to generate and publish additional information associated with the resulting image using their image processing devices. Publication of the additional information related to the received image - the transfer of corresponding signals to data processing facilities on a server that provides access for registered users through their image processing devices to additional information related to the image received. Linking additional information to the resulting image - the formation of a single data block displayed on the screen and / or reproduced by the playback means when referring to the corresponding image of the object detected on the image.

Server-based data processing tools are a remote server or a set of servers connected to each other and implementing one of the cloud technology models, such as, for example, SaaS, PaaS, laaS, Utility computing, MSP.

Each registered user preliminarily transmits his identification data to the server processing facilities, thereby presenting these data to the resource administrator, being registered after that, creating a new registered user.

With the built-in camera or digital storage, an image signal is generated and translated onto the screen of the image processing apparatus to display it in real time and feeding it to the calculation means of the image processing apparatus.

With the help of the calculation tools, the image received from the camera is compared with the images of objects stored on the server or in the memory of the image processing device, and, if necessary, receive geolocation data using the built-in geolocation module.

Providing the user with the ability to enter additional information regarding the image received from the camera and displayed on the screen. In this case, additional information can be textual entered using the real or virtual (screen) keyboard of the image processing device or an image created or selected from the archive, or an audio file created using the microphone of the image processing device or selected from the archive or combination of the above.

In the event that an object is detected on the resulting image, the user is prompted to enter additional information and associate this additional information entered by the user with the image of the recognized object to form a single data block. This single data block includes, if necessary, geolocation data of the place where the image was obtained.

Transmitting by the image processing device communication means for communicating with the server image signals of additional information associated with the image detected on the specified image of the object to the server data processing means, with the possibility of receiving such information by other registered users.

Obtaining additional information associated with specific objects that were detected by computer means of an image processing device of another user.

Displaying or reproducing the information received by other users with the help of other image processing devices, when recognizing the object on the received image for which the association was made on that other image processing device.

Additional information is formed in the form of text and / or image and / or sound and / or a combination thereof.

The image processing apparatus comprises a built-in camera or digital storage device wherein previously saved images are stored, input means provided as keyboard and / or built-in microphone buttons, computing means, digital storage, geolocation module, display and sound reproduction module.

The display of additional information introduced earlier with the aid of other image processing devices is carried out on top of the received image, and the reproduction of the audio additional information is carried out in priority order.

The method for controlling the image processing apparatus is implemented as follows.

Images of objects that are supposed to appear on the image are formed and stored in advance in the memory of the server data processing means or digital storage device.

Registering users of a professional or social Internet resource. In this case, registration is carried out centrally by the administrator of the resource or on the basis of the invitation of any of the registered users.

Using means for forming the image signal, which in the simplest case, the built-in camera receives an image, on which an image of an object could be located, the image of said object is stored on the server or in the memory of the image processing device. Also receiving geolocation data from the corresponding built-in geolocation module.

If recognition occurred, i.e., data is received about the image received and the user wishes to generate additional information regarding the recognized object, it inputs text or multimedia information through the information input means, and generates a command for associating additional information with the recognized object and publishing additional information on the server.

After such publication, any registered user has the opportunity to be in augmented reality when camera of his image processing device captures an image, on which the object is recognized and said generated additional information is received by the image processing device.

A registered user has the opportunity to choose the source of additional information if there are several messages with additional information.

Augmented reality provided in the form of additional information displayed on the screen of the image processing device in real time by imposing on the image obtained from the output of the built-in camera or reproduced in priority order, reducing the playback volume of other concurrent applications.

The image processing apparatus comprises an image forming means, which may be a camera or digital storage device with image and / or audio data, input means, computer means, geolocation means, and a display.

Embodiments of the present invention will now be described with reference to the drawings. The arrangement of components, numerical expressions and numerical values formulated in these embodiments do not limit the scope of this invention unless specifically indicated.

The image processing apparatus comprises an image forming means represented by a camera or external digital storage device with stored on it multimedia content, an input means represented by a real or onscreen keyboard and / or a microphone, calculation means implemented with a processor and software, a geolocation module, which for a global positioning system module implemented by a GPS or GLONASS modules or a module for determining location according to the GSM base stations, display and sound module, and module for communication to the server, implemented as a wireless data transmission node for wireless data transmission, within the limits of Wi-Fi standards or GPRS or LTE standards or the like. In this case, the imager forming means, input means, geolocation module and display are connected to the calculation means.

The calculation means includes means for recognizing an object on the image, means for comparing geographic coordinate data, means for forming a final image for display.

From the output of the image forming means, the signal corresponding to the video image obtained with the camera or stored in the memory of an external digital storage device, enters the input of the calculation means, which provide detection and recognition of the specific object on the image obtained. In this case, images for recognizing objects are extracted from the internal digital storage of the calculation tools or received from a server connected to the means of calculation via the Internet using the communication module with the server.

The resulting image is displayed on the screen, which also displays an indication of the fact of recognition of the object, for example, by highlighting the boundaries of the recognized object.

If the object is recognized, and the user wishes to leave a comment, he makes text input using a real or on-screen keyboard and / or enters a voice comment using a microphone and / or creates a media file that associates with the recognized object. A multimedia file can be created using software editing tools or extracted from the built-in digital storage. The user's commentary forms the additional information about the image that was received.

The generated comment is associated with the recognized object in accordance with the user's command generated by the input tools and sent to the server using the communication module for communication with the server. Sending comments to the server is the publication of the generated additional information.

The communication module for communicating with the server allows the user to receive comments associated with objects on the received image from other registered users, in case such object were recognized.

The processing algorithm for calculation means includes the following main steps.

The calculation program begins when the corresponding user command is executed. Next, the generated image 15, the geolocation data and the data from the server are retrieved, the image is extracted 16 for recognizing the object on the image, checking 17 the fact of object recognition, checking for the presence of comments of other registered users associated with the recognized object, 19 displaying comments of other registered users. Forming 23 and processing the comments associated with the object for transmission of the corresponding signals to the server is the formation of a data packet for sending to the server.

In step 21, checking the presence of comments of other users associated with the coordinates in which the image was received, it is checked whether additional information was left by other registered users at a location characterized by these coordinates. At step 22, comments from other registered users associated with the location coordinates of the user's image processing device are displayed.

Command 20 generating a signal containing additional information associated with the image and sending it to the server.

In step 24, it is checked whether there is an exit command from the program. If there is, then the program is finished - 27, if not, then the next 25 frames of the image are processed.

### Example 1

A phone equipped with a camera, a processor with software, an integrated storage, a geolocation module, a display and a wireless communication module, for example, GPRS is used as an image processing device.

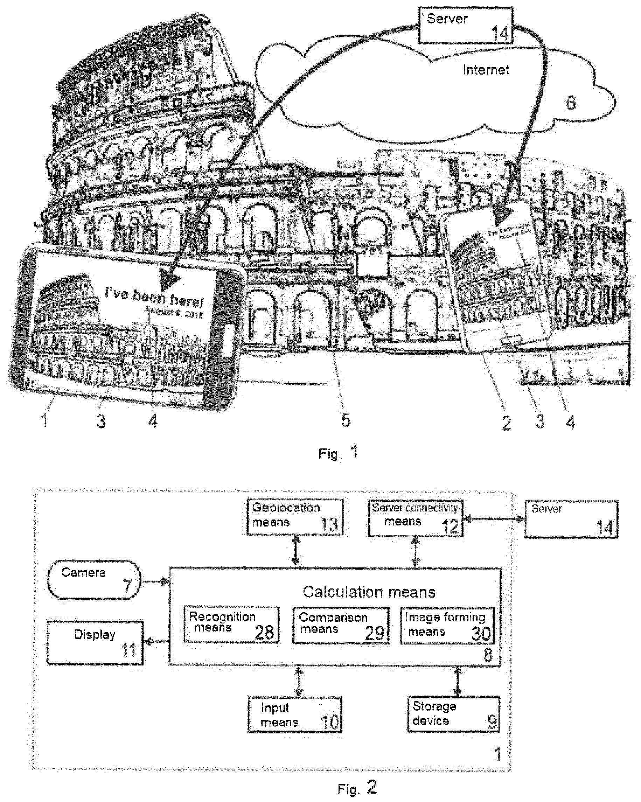

A user who has subscribers to his blogs of the relevant social Internet resource, said subscribers referred to hereinafter as other registered users, while in Rome, guides the camera of the phone to an x architectural structure of interest (Figure 1). In this case, the user's phone accesses the database of the server, where images are stored for recognizing known architectural objects. The image captured by the user is processed by calculation means at the server in order to recognize the architectural object on the image so that an architectural object that has come into view of the camera can be recognized with a certain probability as the Colosseum.

The calculation means of the user's phone can also be involved in the recognition process, in which case the user's phone's data is continuously transmitted to the remote server, so that the images of the architectural objects located in this geographical location are pumped through the Internet to the digital storage of the user's phone and the user's phone to calculation means are used to recognize specific objects in the image.

After the object is recognized by calculation means of the phone, a corresponding message is formed and displayed on the phone's display, informing the user about the fact of recognition. Such a message can be in the form of a highlight or other selection of the recognized object in the image.

The user has the ability to form an augmented reality. Wishing to fixate the fact of visiting a known place, the user with the help of the input means module introduces the text with his name and forms a command for sending. In this case, the entered message is associated by calculation means of the phone with the image of the recognized object and can be displayed on the display of the phone of another registered user, once the specified architectural object will be received in the field of view of the phone camera and recognized.

Thus, any registered user can participate in the process of creating an augmented reality and, at the same time, has the opportunity to be in conditions of augmented reality created by other registered users due to the possibility of receiving messages with additional information from other registered users. These messages can be obtained by recognizing by means of calculating the telephone of objects for which messages were previously entered by other registered users.

Recognition of the object may not occur, for example, due to unsuccessful camera angle, insufficient lighting, or lack of an image of the object. In this case, the message left by the user is associated with the coordinates of the place where the user's message was made, so that another phone of a registered user who finds himself in a location characterized by the same or similar geographical coordinates receives said message previously entered by the first user on his phone display. The message is output on top of the image obtained from the output of the built-in camera of the phone of this other registered user.

### Example 2

The method of controlling the image processing device is used to test student's knowledge within the learning course of a foreign language. A mobile communication device is used as an image processing device, said communication device comprises an embedded camera, a processor with software, a built-in a storage device, a display and audio playback means, a microphone and a wireless communication module, for example, Wi-Fi for communicating with the server.

The teacher and students together participating in the relevant educational Internet resource as registered users.

The teacher instructs the students to visit after school or on the way to school known buildings in the city associated with a certain historical event and briefly characterize them in a foreign language with respect to history, importance for the city, characteristics of the owner or other, or to answer questions regarding said buildings.

While passing by the building, the student captures it with the built-in camera, pronounces the required text and sends it as additional information.

During the process of checking out the results, the teacher uses a database containing pre-created images of architectural objects or simply buildings and institutions of the city, selecting objects directly related to his task.

After the object is recognized by means of its image processing device, the teacher receives a list of students who have left their comments at the object they have chosen and by selecting the desired surname listens to the monologue of the corresponding student.

Such tasks are attractive for students with their unusual character and novelty, using such tasks makes it possible to check the pupil's knowledge in the real conditions of the life of the city, and also get an idea of the dynamics of the pupil's mastery of the course when the task is repeated after a certain period of time.

### Example 3

The method of controlling the image processing device is used as a means for exchanging messages between the teacher and pupil's parents.

As an image processing device used a mobile communication device equipped with an embedded camera, a processor with software, a built-in storage device, a display and audio reproduction means, a microphone and a wireless communication module, for example, Wi-Fi for communicating with the server.

The teacher, students and their parents are registered users of the resource created in the educational process. Images used for recognition of the faces of students are created in advance and stored in the memory of the server.

In the process of training, the teacher periodically needs to inform parents about the successes or problems that have arisen with their child. The teacher captures with the built-in camera of his phone the image of the student's face, which is recognized by calculation means of the phone and records an audio or text message for the parents.

Parents, wishing to learn about the availability of messages from the instructor and get acquainted with their content, capture with the camera of their means of communication the image of their child's face and after recognition receive a corresponding sound or text message left by the teacher.

As a response, parents, through their communication tools, can leave an e-mail message to the teacher who will receive it when they see the student and use the camera of their communication device to capture an image of the student's face.

Thus, messages are generated by registered users at their spare time convenient for them, and the student, with respect to whom the messages are formed, becomes a participant in the dialogue or, at least, communicated the teacher's feedback.

The method for controlling the image processing device allows the display or reproduction of additional information only when an image of a known and recognized object appears on the captured image, or when the user is in the geographic coordinates where this additional information is to be generated. There is no need to transfer large amounts of information to a registered image processing device which reduces the requirements for the speed of data transfer of the wireless communication lines. In addition, such automatic selection of information transmitted for display improves the usability of the image processing device, which facilitates the implementation of the device and enables the productive work with the received additional information.

The method of controlling the image processing device allows the user to obtain additional information on the image obtained in real time, allowing himself to feel in the conditions of augmented reality. In this case, the user does not have to determine the destination for the additional information that he has generated, which is transmitted to the device image processing of any registered user when the condition of object recognition is fulfilled or, if necessary, the proximity of geographical coordinates, in which additional information was generated, that is, for an unlimited number of users.

The method for controlling the image processing device can be implemented using standard components and an set of electronic components including independent modules such as a camera, display, processor, etc.

Thus, the method of controlling the image processing apparatus is simpler in implementation by reducing the requirements for the wireless communication lines used, more convenient to use since it excludes the displaying of the additional information not related to the objects detected on the image, provides the possibility of using the image in real time forming conditions of augmented reality, and also provides the opportunity to obtain additional information for an unlimited range of users.

## Claims

1. A method for controlling an image processing apparatus, comprising transmitting data to be reproduced on an image processing device of another registered user, **characterized in that**
a. obtaining an image signal by an image signal forming means and displaying in real time by means of a screen,
b. recognizing at least one object on the obtained image,
c. associating additional information inputted by input means to an image of the recognized object,
d. wherein transmission of data is the transfer of additional information related to the image of the recognized object, with the possibility of receiving them on image processing devices of other registered users using the Internet,
e. receiving and displaying additional information entered earlier with the image processing devices of other registered users, provided that the fact of recognition of the relevant object on the resulting image is available, the display additional information,
wherein recognition of objects on the obtained image and associating additional information with the image of the recognized object is carried out in real time, the output of additional information introduced earlier with the help of other image processing devices is carried out over the image obtained from the output of the image signal forming means.

2. The method according to claim 1, wherein the recognition of the object on the image is carried out by means of calculation means based on the comparison of the obtained image with the stored images of the objects.

3. The method according to claim 1, wherein the additional information is formed as an image, including a text and / or audio signal, and / or a combination thereof.

4. The method according to claim 1, wherein the image signal forming means is a built-in camera.

5. The method according to claim 1, wherein the image signal forming means is a digital data store.

6. The method according to claim 1, wherein the transfer of additional information associated with the image of the recognized object is performed to server data processing means associated with image processing devices of other registered users via the Internet.

7. The method according to claim 1, wherein the appearance of the registered user includes following steps: providing an administrator or a user already registered with a user registration request, generating and sending a registration response message to said user.

8. The method according to claim 1, **characterized in that** the association of additional information to the recognized object comprises forming a single data block, so that when the corresponding object is recognized in the image, additional information associated with the object is included in this data block.

9. The method according to claim 1, **characterized in that** the associating of additional information to the recognized object is performed when additional information is generated by any registered user on its image processing device.

10. The method according to claim 1, wherein the image processing apparatus comprises an image signal forming means, input means, computing means, and a display.
